(19) Europäisches Patentamt / European Patent Office / Office européen des brevets

(11) **EP 3 705 912 A1**

(12) **EUROPEAN PATENT APPLICATION**
published in accordance with Art. 153(4) EPC

(43) Date of publication:
**09.09.2020 Bulletin 2020/37**

(21) Application number: **17935388.3**

(22) Date of filing: **18.12.2017**

(51) Int Cl.:
*G01S 13/93* (2020.01)    *G01S 13/94* (2006.01)

(86) International application number:
**PCT/CN2017/116862**

(87) International publication number:
**WO 2019/119184 (27.06.2019 Gazette 2019/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **SZ DJI Technology Co., Ltd.**
**Shenzhen, Guangdong 518057 (CN)**

(72) Inventors:
• **WANG, Shirong**
  **Shenzhen, Guangdong 518057 (CN)**
• **WANG, Chunming**
  **Shenzhen, Guangdong 518057 (CN)**
• **WANG, Junxi**
  **Shenzhen, Guangdong 518057 (CN)**

(74) Representative: **Appelt, Christian W.**
**Boehmert & Boehmert**
**Anwaltspartnerschaft mbB**
**Pettenkoferstrasse 22**
**80336 München (DE)**

(54) **TERRAIN PREDICTION METHOD, DEVICE AND SYSTEM, AND DRONE**

(57) Embodiments of the present disclosure provide a terrain prediction method, device, and system, and an unmanned aerial vehicle. The method includes acquiring multiple pieces of first ranging data obtained by performing ranging on the ground when in a preset angle interval during rotation, determining a terrain parameter of the ground such as gradient and integrity, etc. according to the multiple pieces of first ranging data. Since each piece of first ranging data reflects the distance between the radar and the ground ranging point when the radar is rotated to the corresponding rotation angle, the multiple pieces of first ranging data can reflect the terrain change of the ground, and hence the gradient and integrity, etc. can be predicted accordingly. In this embodiment, the ranging data is obtained by the radar, and does not require the radar to directly contact the ground, thereby avoiding the noise interference caused by the direct contact and achieving higher accuracy of the ground terrain prediction.

```
┌────────────────────────────────────────────────────────────┐
│ Acquire N pieces of first ranging data obtained by a radar   │
│ performing ranging on a ground during a rotation process,    │ ⟿ S201
│ wherein the N pieces of first ranging data are obtained when │
│ a rotation angle of the radar is within a preset angle       │
│ interval                                                     │
└────────────────────────────────────────────────────────────┘
                              │
                              ▼
┌────────────────────────────────────────────────────────────┐
│ Determine a terrain parameter of the ground according to the │
│ N pieces of first ranging data. The terrain parameter        │ ⟿ S202
│ comprising at least one of the following: gradient and       │
│ flatness                                                     │
└────────────────────────────────────────────────────────────┘
```

FIG. 2

## Description

## TECHNICAL FIELD

The present disclosure relates to the unmanned aerial vehicle technology field, and more particularly, to a terrain prediction method, device, and system, and an unmanned aerial vehicle.

## BACKGROUND

Currently unmanned aerial vehicles can be used in a variety of scenarios. Taking the agricultural industry as an example, unmanned aerial vehicles can cultivate land, sow, spray pesticides, and harvest crops, which brings great benefits to the agricultural sector. In these operating scenarios, most unmanned aerial vehicles need to fly near the ground, and avoid accidentally hitting the ground when climbing uphill. On a relatively flat ground, based on Global Positioning System (GPS) and Inertial Measurement Unit (IMU) data, unmanned aerial vehicles can successfully complete the above tasks. In rough terrain, unmanned aerial vehicles need to adjust their actions in advance, such as climbing, downhill, deceleration, braking, etc., to achieve near-ground flight or even contour flight, making the unmanned aerial vehicle to complete the above operations better. Therefore, unmanned aerial vehicles need to predict the terrain conditions of the ground on which they operate. In the existing technologies, a car is driven through the ground, during the passing process, the relative change of acceleration is generated by the contact between the car and the ground, and then the terrain of the ground is estimated based on the change in acceleration. However, the contact between the car and the ground generates high frequency noise, which affects the amount of change in acceleration, and hence affects the accuracy of terrain prediction.

## SUMMARY

In accordance with the present disclosure, there is provided a terrain prediction method, device, and system, and an unmanned aerial vehicle, which are used to improve the accuracy of terrain prediction.

In a first aspect, an embodiment of the present disclosure provides a terrain prediction method including acquiring N pieces of first ranging data obtained by a radar performing ranging on a ground during a rotation process, where the N pieces of first ranging data are obtained when a rotation angle of the radar is within a preset angle interval and N is an integer greater than 1, and determining a terrain parameter of the ground according to the N pieces of first ranging data, where the terrain parameter includes at least one of the following: gradient and flatness.

In a second aspect, an embodiment of the present disclosure provides a terrain prediction device including a memory storing a computer program and a processor configured to call and execute the computer program to perform the following operations: acquiring N pieces of first ranging data obtained by a radar performing ranging on a ground during a rotation process, where the N pieces of first ranging data are obtained when a rotation angle of the radar is within a preset angle interval and N is an integer greater than 1, and determining a terrain parameter of the ground according to the N pieces of first ranging data, where the terrain parameter includes at least one of the following: gradient and flatness.

In a third aspect, an embodiment of the present disclosure provides an unmanned aerial vehicle including a radar and a terrain prediction device, where the terrain prediction device is communicatively connected to the radar. The terrain prediction device is the terrain prediction device according to the embodiment of the present disclosure in the second aspect.

In a fourth aspect, an embodiment of the present disclosure provides a terrain prediction system including an unmanned aerial vehicle and a control terminal, where the unmanned aerial vehicle is communicatively connected to the control terminal. The control terminal is configured to control the unmanned aerial vehicle. The unmanned aerial vehicle is equipped with a radar. The control terminal includes the terrain prediction device according to the embodiment of the present disclosure in the second aspect.

In a fifth aspect, an embodiment of the present disclosure provides a chip including a memory storing a computer program and a processor configured to call and execute the computer program to perform the following operations: acquiring N pieces of first ranging data obtained by a radar performing ranging on a ground during a rotation process, where the N pieces of first ranging data are obtained when a rotation angle of the radar is within a preset angle interval and N is an integer greater than 1, and determining a terrain parameter of the ground according to the N pieces of first ranging data, where the terrain parameter includes at least one of the following: gradient and flatness.

In a sixth aspect, an embodiment of the present disclosure provides a readable storage medium storing a computer program. When the computer program is executed, the terrain prediction method according to the embodiment of the present disclosure is implemented.

The terrain prediction method, device and system, and unmanned aerial vehicle provided by the embodiments of the present disclosure determine a terrain parameter of the ground such as gradient and integrity, etc., according to multiple pieces of first ranging data obtained by measuring the ground in a range of rotation to a preset angle interval during rotation. Since each piece of first ranging data reflects the distance between the radar and the ground ranging point when the radar is rotated to the corresponding rotation angle, the multiple pieces of first ranging data can reflect the terrain change of the ground, and hence the gradient and integrity, etc. can be predicted accordingly. In this embodiment, the ranging data is obtained by the radar, and does not require the radar to directly contact the ground, thereby avoiding the noise interference caused by the direct contact and achieving higher accuracy of the ground terrain prediction.

## BRIEF DESCRIPTION OF THE DRAWINGS

In order to more clearly explain the embodiments of the present disclosure or the technical solutions in the existing technologies, the drawings used in the description of the embodiments or the existing technologies will be briefly introduced below. Obviously, the drawings in the following description are some embodiments of the present disclosure. For those of ordinary skill in the art, other drawings can be obtained based on these drawings without creative efforts.

FIG. 1 is a schematic structural diagram of an agricultural unmanned aerial vehicle 100 according to one embodiment of the present disclosure.
FIG. 2 is a flowchart of a terrain prediction method according to one embodiment of the present disclosure.
FIG. 3 is a schematic diagram of radar ranging according to one embodiment of the present disclosure.
FIG. 4 is a schematic structural diagram of a terrain prediction device according to one embodiment of the present disclosure.
FIG. 5 is a schematic structural diagram of an unmanned aerial vehicle according to one embodiment of the present disclosure.
FIG. 6 is a schematic structural diagram of a terrain prediction system according to one embodiment of the present disclosure.

## DETAILED DESCRIPTION OF THE EMBODIMENTS

To better illustrate the objectives, technical solutions, and advantages of embodiments of the present disclosure, technical solutions of the present disclosure will be described with reference to the drawings. It will be appreciated that the described embodiments are some rather than all of the embodiments of the present disclosure. Other embodiments conceived by those having ordinary skills in the art on the basis of the described embodiments without inventive efforts should fall within the scope of the present disclosure.

Embodiments of the present disclosure provide a terrain prediction method, device, and system, and an unmanned aerial vehicle. The unmanned aerial vehicle can be an agricultural unmanned aerial vehicle, such as a rotorcraft, e.g., a multi-rotor aircraft propelled by a plurality of propulsion devices through air, and embodiments of the present disclosure are not limited to these terms.

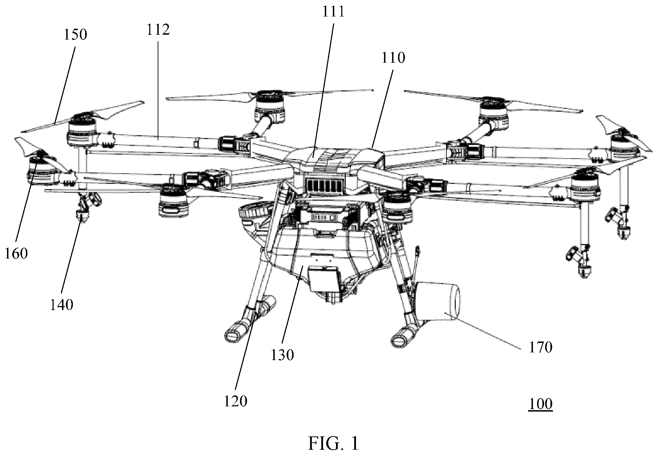

FIG. 1 is a schematic structural diagram of an agricultural unmanned aerial vehicle 100 according to one embodiment of the present disclosure. This embodiment is described by taking a rotary wing unmanned aerial vehicle (UAV) as an example.

An agricultural unmanned aerial vehicle 100 may include a power system, a flight control system, and a rack. The agricultural unmanned aerial vehicle 100 can wirelessly communicate with a control terminal that can display flight information of the agricultural unmanned aerial vehicle, etc. The control terminal may communicate with the agricultural unmanned aerial vehicle 100 in a wireless manner for remotely controlling the agricultural unmanned aerial vehicle 100.

A rack may include a vehicle body 110 and a stand 120 (also referred to as a landing gear). The vehicle body 110 may include a center frame 111 and one or more arms 112 connected to the center frame 111. The one or more arms 112 extend radially from the center frame. The stand 120 is connected to the vehicle body 110, and is used for supporting the agricultural unmanned aerial vehicle 100 during landing. A liquid storage tank 130 used to store chemical liquid or water is mounted between the stands 120. A spray head 140 is mounted at the end of the arm 112, and the liquid in the liquid storage tank 130 is pumped into the spray head 140 through a pump, and is sprayed out by the spray head 140.

The power system may include one or more electronic speed controllers (simply referred to as ESCs), one or more propellers 150, and one or more motors 160 corresponding to the one or more propellers 150. The motor 160 is connected between the electronic speed controller and the propeller 150. The motor 160 and the propeller 150 are configured on the arm 112 of the agricultural unmanned aerial vehicle 100. The electronic speed controller is used to receive the driving signal generated by the flight control system and provide a driving current to the motor according to the driving signal to control the rotation speed of the motor 160. The motor 160 is used to drive the propeller 150 to rotate, thereby providing power for the flight of the agricultural unmanned aerial vehicle 100, and the power enables the agricultural unmanned aerial vehicle 100 to perform movements with one or more degrees of freedom. In some embodiments, the agricultural unmanned aerial vehicle 100 may rotate around one or more rotation axis. For example, the rotation axis may include a roll axis, a yaw axis, and a pitch axis. It should be understood that the motor 160 can be a DC motor or an AC motor, a brushless motor or a brushed motor.

The flight control system can include a flight controller and a sensing system. The sensing system is used to measure the attitude information of the unmanned aerial vehicle, that is, the position information and status information of the agricultural unmanned aerial vehicle 100 in space, such as three-dimensional position, three-dimensional angle, three-dimensional velocity, three-dimensional acceleration, and three-dimensional angular velocity, etc. The sensing system may include, for example, at least one of a gyroscope, an ultrasonic sensor, an electronic compass, an inertial measurement unit (IMU), a vision sensor, a global navigation satellite system, and a barometer, etc. For example, a global navigation satellite system may be a Global Positioning System (GPS). The flight controller is used to control the flight of the agricultural unmanned aerial vehicle 100. For example, the flight controller can control the flight of the agricultural unmanned aerial vehicle 100 according to the attitude information measured by the sensing system. It should be understood that the flight controller may control the agricultural unmanned aerial vehicle 100 according to a pre-programmed program instruction, and may also control the agricultural unmanned aerial vehicle 100 by responding to one or more control instructions from the control terminal.

As shown in FIG. 1, a stand 120 of an agricultural unmanned aerial vehicle can also be equipped with a radar 170 that is a rotary radar. The radar 170 can be used for but not limited to ranging.

It should be understood that the above described naming of various components of the agricultural unmanned aerial vehicle is for identification purposes only, and should not be construed as limiting the embodiments of the present disclosure.

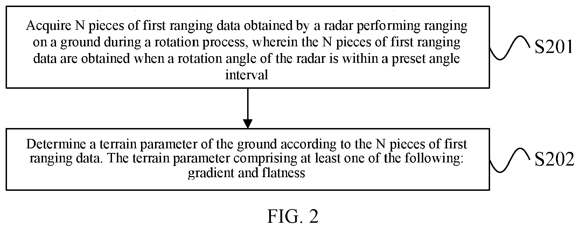

FIG. 2 is a flowchart of a terrain prediction method according to one embodiment of the present disclosure. As shown in FIG. 2, the method in this embodiment may include the following.

At S201, N pieces of first ranging data obtained by a radar performing ranging on a ground during a rotation process are acquired, where the N pieces of first ranging data are obtained when a rotation angle of the radar is within a preset angle interval.

At S202, a terrain parameter of the ground is determined according to the N pieces of first ranging data, where the terrain parameter includes at least one of the following: gradient and flatness.

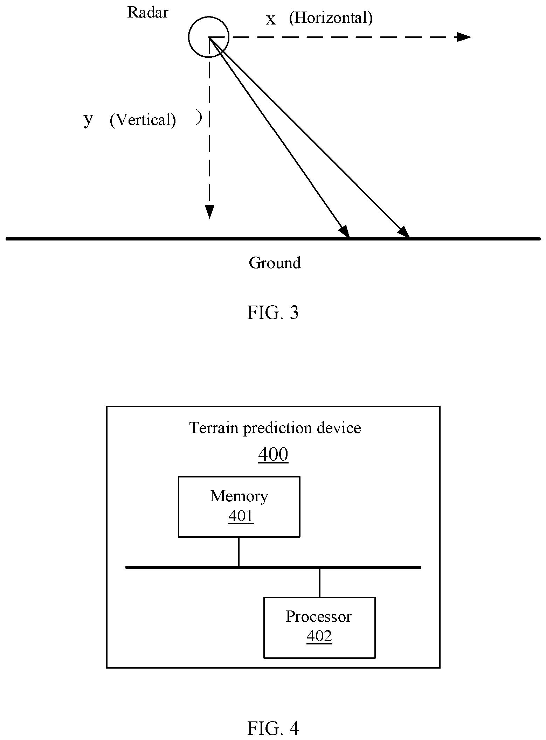

In this embodiment, the ground can be measured by a radar to obtain the distance between the radar and the ground. The radar can rotate. When the radar rotates at different angles, the ranging point of the radar to measure the ground is also different, and hence the distance to the ground detected by the radar may also be different, as shown in FIG. 3. This embodiment acquires the multiple pieces of first ranging data obtained by the radar when measuring the ground while rotating with a rotation angle being within a preset angle interval. The number of pieces of first ranging data is counted as N that is an integer greater than or equal to 2. Each piece of first ranging data reflects the distance of the radar from the ground when it is rotated to the corresponding rotation angle. For a same ranging point, if the ground where the ranging point is at is high, the distance between the radar and the ground is small, and if the ground where the ranging point is at is low, the distance between the radar and the ground is large. Specifically, if a ground is high in one area and low in another area, a low flatness of the ground is indicated. For the same plurality of ranging points, if the distances between the radar and the ground are all small, it is indicated that the gradient of the ground where the plurality of ranging points are located is high. On the other hand, if the distances between the radar and the ground are large, the gradient of the ground where the plurality of ranging points are located is low. Since the ground is a surface and a plurality of points can determine a surface, this embodiment can determine the terrain parameters of a ground according to the multiple pieces of first ranging data obtained from the plurality of ranging points. The terrain parameters include gradient, flatness of the ground.

For example, when the preset angle interval is 60 degrees to 120 degrees, the corresponding terrain parameters of the ground directly below the radar can be determined. When the preset angle interval is -30 degrees to 30 degrees, the corresponding terrain parameters of the ground in front of the radar can be determined. When the preset angle range is 150 degrees to 210 degrees, the corresponding terrain parameters of the ground behind the radar can be determined. It should be noted that the above described examples are for the purpose of illustration and are not limiting. The preset angel interval can be set according to actual needs. If the preset angle interval of this embodiment is 60 degrees to 120 degrees, the first ranging data can be obtained by the radar ranging from the ground at a rotation angle of 60 degrees, 60.6 degrees, 61.2 degrees, 61.8 degrees, and so on, which will not be repeated here.

In this embodiment, a terrain parameter of the ground, such as gradient and integrity, etc. is determined according to the multiple pieces of first ranging data obtained by ranging the ground when within a preset angle interval while rotating. Since each piece of first ranging data reflects the distance between the radar and the ground ranging point when the radar is rotated to the corresponding rotation angle, the multiple pieces of first ranging data can reflect the terrain change of the ground, and hence the gradient and integrity, etc. can be predicted accordingly. In this embodiment, the ranging data is obtained by the radar, and the radar is not required to directly contact the ground, thereby avoiding the noise interference caused by the direct contact and achieving higher accuracy of the ground terrain prediction.

Each piece of first ranging data includes the horizontal distance of the radar from the ground ranging point, and the vertical distance of the radar from the ground ranging point. Since the rotation angle of the radar is different, the signal transmission direction of the radar is different, resulting in different ground ranging points, and hence the ground ranging point varies with the rotation angle of the radar. In this embodiment, in order to avoid the situation that the distance between the radar and the ground ranging point is same while the terrain of the ground is different, which causes subsequent inaccurate terrain predictions, the first ranging data includes the above-mentioned horizontal distance and vertical distance that can be obtained according to the distance between the radar and the ground ranging point and the rotation angle of the radar corresponding to the ground ranging point. Specifically, for the same distance between the radar and the ground ranging point, if the radar has a larger horizontal distance from the ground ranging point and a small vertical distance, it can be considered that the gradient of the ground is higher. On the other hand, if the radar has a smaller horizontal distance from the ground ranging point and a large vertical distance, it can be considered that the gradient of the ground is lower.

In some embodiments, a possible implementation method of above described S201 may include the following steps A and B:

At step A, M pieces of second ranging data obtained by a radar performing ranging on a ground during a rotation process are acquired, where the M pieces of second ranging data are all the ranging data obtained when the radar is performing ranging on the ground with a rotation angle in a preset angle interval, and M is an integer greater than or equal to N.

In this embodiment, all the ranging data obtained by the radar when the rotation angle of the radar is within a preset angle interval during rotation are acquired. These ranging data are referred to as M pieces of second ranging data and M is an integer greater than or equal to N.

In some embodiments, a possible implementation method of step A may include steps A1 and A2.

At step A1, all the second ranging data of the ground ranging for one revolution of the radar and the rotation angle of the radar corresponding to each piece of second ranging data are obtained.

At step A2, the second ranging data corresponding to the rotation angles of the radar located in the preset angle interval according to the preset angle interval are obtained and determined as the M pieces of second ranging data.

In this embodiment, one revolution of the radar corresponds to a rotation of the radar by a total of 360 degrees. For example, if one revolution of the radar corresponds to 600 light grids, every time the radar rotates for 0.6 degree indicates that the radar rotates to a corresponding light grid, and then a range measurement is triggered, and hence 600 pieces of ranging data can be obtained. In addition, this embodiment also records the rotation angle of the radar corresponding to each piece of ranging data. The ranging principle of a radar can be obtained by referring to the related description in the existing technologies, which will not be repeated here. Then the second ranging data corresponding to the rotation angle of the radar located in the preset angle interval according to the preset angle interval are obtained. For example, if the preset angle interval is 60-120 degrees, the second ranging data corresponding to 60, 60.6, 61.2, ..., 118.8, 119.4, and 120 degrees can be filtered out and hence a total of 100 pieces of second ranging data can be obtained, that is, M is equal to 100.

At step B, N pieces of first ranging data are acquired according to the M pieces of second ranging data.

In this embodiment, the second ranging data is data obtained by actual ranging of the radar. After the above described M pieces of second ranging data are obtained, the N pieces of first ranging data used for performing terrain prediction can be obtained according to the M pieces of second ranging data, where N is an integer smaller than or equal to M.

In some embodiments, a possible implementation method of above described step B may include step B1.

At step B1, the N pieces of first ranging data are determined according to the M pieces of second ranging data and a valid ranging condition including, smaller than or equal to a preset maximum distance and larger than or equal to a preset minimum distance.

In this embodiment, the validity of each piece of ranging data is judged. A radar has a dead zone in a short range and a longest ranging distance. Therefore, a valid ranging condition can be set and expressed as $[d_{min}, d_{max}]$, that is, a valid second ranging data should be larger than or equal to $d_{min}$, and smaller than or equal to $d_{max}$. In this embodiment, the N pieces of first ranging data determined according to the M pieces of second ranging data and the valid ranging condition are used to predict the terrain of the ground and errors of the ranging data are avoided to improve the accuracy of the terrain prediction.

In some embodiments, a possible implementation method of above described step B1 may include steps B11 and B12.

At step B11, the second ranging data satisfying the described valid ranging condition are determined as N pieces of second ranging data from the described M pieces of second ranging data.

In this embodiment, all the second ranging data smaller than or equal to a preset maximum distance and smaller than or equal to a preset minimum distance are determined from the M pieces of second ranging data as the N pieces of second ranging data.

At step B11, the N pieces of first ranging data are determined according to the N pieces of second ranging data.

In this embodiment, the N pieces of first ranging data are determined according to the N pieces of second ranging data that meet the valid ranging condition determined above.

In a possible implementation method, the N pieces of second ranging data may be determined as the N pieces of first ranging data, that is, the first ranging data is equal to the second ranging data.

In another possible implementation method, the N pieces of first ranging data are obtained by smoothing the N pieces of second ranging data. For example, the N pieces of second ranging data are sorted according to an order of the rotation angles of the radar corresponding to the second ranging data. For example, the first piece of second ranging data is the second ranging data $d_1$ corresponding to 60 degrees, the second piece of second ranging data is the second ranging data $d_2$ corresponding to 60.6 degrees, and so on. Then it is determined that the first piece of second ranging data is the first piece of first ranging data, that is, $D_1$ is equal to $d_1$, and the Nth piece of second ranging data is the Nth piece of second ranging data, that is, $D_N$ is equal to $d_N$. The average value of the (j-1)th piece of second ranging data (i.e., $d_{j-1}$), the jth piece of second ranging data (i.e., $d_j$), and the (j+1)th piece of second ranging data (i.e., $d_{j+1}$) is then determined as the jth piece of first ranging data, that is, $D_j=[d_{j-1}+d_j+d_{j+1}]/3$, where j is an integer larger than or equal to 2 and smaller than or equal to N-1.

It should be noted that $D_j$ is not limited to the average value of the three of $d_j$ and its adjacent left one and right one, and may also be the average value of $d_j$ and its adjacent left two and right two. Correspondingly, the first and second piece of first ranging data are respectively equal to the first and second piece of second ranging data, and the (N-1)th and Nth piece of first ranging data are respectively equal to the (N-1)th and Nth piece of second ranging data. In this embodiment, adjacent three, four, and so on can also be used for smoothing with similar method, and will not be repeated here.

Further, the above $d_j$ can be one value, that is, the distance between the radar and the ground ranging point. In this embodiment, after the smoothing process is performed, the horizontal distance $x_j$ and the vertical distance $y_j$ in the corresponding first ranging data are obtained according to the corresponding rotation angle of the radar.

Further, the above $d_j$ can include two values, that is, the horizontal distance and the vertical distance between the radar and the ground ranging point. In this embodiment, the horizontal distance can be smoothed to obtain the horizontal distance in the first ranging data, or the vertical distance can be smoothed to obtain the vertical distance in the first ranging data.

In some embodiments, a possible implementation method of above described S202 may include the following steps C and D:

At step C, a linear fitting is performed on the N pieces of first ranging data by a least square method to obtain a linear function.

Specifically, a linear function of the vertical distance between the radar and the ground ranging point and the horizontal distance between the radar and the ground ranging point is constructed, and can be expressed as shown in Equation 1 for example: y=ax+b+e, where y is the vertical distance between the radar and the ground ranging point, x is the horizontal distance between the radar and the ground ranging point, and a, b, and c are unknown at this time. Then the slope and intercept in the linear function are determined according to the N pieces of first ranging data, the linear function, and a least square method. The N pieces of first ranging data are known, and each piece of first ranging data includes the horizontal distance and the vertical distance between the radar and the corresponding ground ranging point. The slope (e.g., a) and the intercept (e.g., b) of the linear function are determined by substituting the known values of the N groups of x and y into the above Equation 1, and then using the least square method.

It should be noted that this embodiment is not limited to the above described least square method, and a filtering method can also be adopted.

At step D, terrain parameters of the ground are determined according to the linear function.

In this embodiment, the gradient of the ground can be determined according to the slope of the linear function. For example, the larger the slope of the linear function, the larger the gradient of the ground, and the smaller the slope of the linear function, the smaller the gradient of the ground; and/or, the flatness of the ground can be determined according to the slope and the intercept of the linear function.

The following describes how to determine the slope and the intercept in a linear function according to the N pieces of first ranging data, the linear function, and the least square method.

In a possible implementation method, a residual in the linear function corresponding to each piece of first ranging data is determined according to the N pieces of first ranging data and the linear function, where the residual corresponding to each piece of first ranging data is a function of the slope and the intercept of the linear function. For example, $e=y_i-ax_i-b$, where $y_i$ is the vertical distance in the ith first ranging data, and $x_i$ is the horizontal distance in the ith first ranging data. Then a weighted sum of squared residuals corresponding to the N pieces of ranging data is determined according to the residuals corresponding to various pieces of first ranging data and the weighting coefficients of the residuals. The weighted sum of squared residuals is, for example, expressed as

$$Q = \sum_{i=1}^{n} w_i \left( y_i - ax_i - b \right)^2 ,$$

shown in Equation 2:
where Q is the weighted sum of squared residuals, $w_i$ is the weighting coefficient of the residual corresponding to the ith first ranging data, and the value of n is equal to the value of N.

In this embodiment, the value of the slope and the value of the intercept of the linear function are determined according to the weighted sum of squared residuals. Specifically, the value of the slope and the value of the intercept of the linear function are determined based on that the first derivative of the weighted sum of squared residuals to the slope is equal to a first preset value and the first derivative of the weighted sum of squared residuals to the intercept is equal to a second preset value.

The first preset value and the second preset value can be set to 0 in order to minimize the value of Q and optimize the values of a and b. Accordingly, the first derivative of the weighted sum of squared residuals (Q) to the slope (a) is equal to 0, and the first derivative of the weighted sum of squared residuals (Q) to the intercept (b) is equal to 0. This can be shown, for example, in Equation 3:

$$\frac{\partial Q}{\partial a} = 2\sum_{i=1}^{n} w_i \left( y_i - ax_i - b \right)\left( -x_i \right) = 0$$

$$\frac{\partial Q}{\partial b} = 2\sum_{i=1}^{n} w_i \left( y_i - ax_i - b \right)\left( -1 \right) = 0$$

According to the above Equation 3, the estimated value $\hat{a}$ of a and the estimated value $\hat{b}$ of b can be obtained as shown in Equation 4 below:

$$\hat{a} = \frac{\sum_{i=1}^{n} w_i x_i y_i - \sum_{i=1}^{n} w_i x_i \sum_{i=1}^{n} w_i y_i}{\sum_{i=1}^{n} w_i x_i^2 - \left( \sum_{i=1}^{n} w_i x_i \right)^2}$$

$$\hat{b} = \frac{\sum_{i=1}^{n} w_i x_i^2 \sum_{i=1}^{n} w_i y_i - \sum_{i=1}^{n} w_i x_i \sum_{i=1}^{n} w_i x_i y_i}{\sum_{i=1}^{n} w_i x_i^2 - \left( \sum_{i=1}^{n} w_i x_i \right)^2}$$

In this embodiment, $\hat{a}$ can be used as the value of the slope a, and $\hat{b}$ can be used as the value of the intercept b.

Correspondingly, according to the slope and intercept of the linear function, a possible implementation method for determining the flatness of the ground is, determining the value of the weighted sum of squared residuals based on the value of the determined slope and the value of the determined intercept. For example, the value of Q is obtained by substituting the value of a (above $\hat{a}$) and the value of b (above $\hat{b}$) into the above Equation 2. Then the flatness of the ground can be determined according to the value of the weighted sum of squared residuals. For example, the larger the value of Q, the more uneven the ground, and the smaller the value of Q, the more flat the ground.

In an alternative solution, in this embodiment, Equations 4 and 2 as described above can be stored in advance. $\hat{a}$ and $\hat{b}$ can be obtained by substituting the obtained N pieces of first ranging data into the pre-stored Equation 4. The gradient of the ground can be determined according to $\hat{a}$. Then Q can be obtained by substituting the obtained $\hat{a}$ and $\hat{b}$ into the pre-stored Equation 2. The flatness of the ground can be determined according to the value of Q.

In some embodiments, the weighting coefficients of the residuals corresponding to all of the first ranging data are equal, in which case even if the values of i are different, $w_i$ is the same. For example, all $w_i$ are equal to 1, or all $w_i$ are equal to 1/N, which indicates the sum of the weighting coefficients of the residuals corresponding to the N pieces of first ranging data is equal to 1.

In some embodiments, since the ranging data obtained through radar ranging has an error that increases as distance increases, it is needed to assign a weight to the corresponding first ranging data according to the radar rotation angle.

In a possible implementation method, the weighting coefficient of the residual corresponding to each piece of first ranging data is a trigonometric function of the rotation angle of the radar corresponding to the first ranging data, for example, as shown in Equation 5:

$$w_i = 1 - \left( \frac{k_i - k_{\min}}{k_{\max} - k_i} \right)$$

where $k_{\min}$ is the minimum value of a preset angle interval, $k_{\max}$ is the maximum value of a preset angle interval, and $k_i$ is the rotation angle of the radar corresponding to the ith piece of first ranging data.

Optionally, if the sum of the weighting coefficients of the residuals corresponding to the N pieces of first ranging data is equal to 1, the above described trigonometric function needs to be normalized. The weighting coefficient of the residual is, for example, as shown in Equation 6:

$$w_i = \frac{1 - \left( \dfrac{k_i - k_{\min}}{k_{\max} - k_i} \right)}{\sum_{i=1}^{N} \left( 1 - \left( \dfrac{k_i - k_{\min}}{k_{\max} - k_i} \right) \right)}$$

In another possible implementation method, the weighting coefficient of the residual corresponding to each piece of first ranging data is a Gaussian function of the rotation angle of the radar corresponding to the first ranging data, for example, as shown in Equation 7:

$$w_i = \frac{1}{\sigma\sqrt{2\pi}} e^{-\frac{(k_i - \mu)^2}{2\sigma^2}}$$

where $k_i$ is the rotation angle of the radar corresponding to the ith piece of first ranging data, $\sigma$ is the variance, and $\mu$ is the median of the preset angle interval.

The shape of the above function can be adjusted according to the value of the variance. The smaller the variance, the larger the weight of the median of the preset angle interval. The larger the variance, the smaller the weight of the median of the preset angle interval. The value of the variance can be set in advance according to the actual needs. If the preset angle interval is 60-120 degrees, $\mu$ is 90 degrees.

Optionally, if the sum of the weighting coefficients of the residuals corresponding to the N pieces of first ranging data is equal to 1, the above described Gaussian function needs to be normalized. The weighting coefficient of the residual is, for example, as shown in Equation 8:

$$w_i = \frac{\dfrac{1}{\sigma\sqrt{2\pi}}e^{-\dfrac{(k_i-\mu)^2}{2\sigma^2}}}{\sum\limits_{i=1}^{N}\dfrac{1}{\sigma\sqrt{2\pi}}e^{-\dfrac{(k_i-\mu)^2}{2\sigma^2}}}$$

In this embodiment, after a flatness of the ground is determined, the flatness can be used in the height determination and obstacle avoidance scheme of an unmanned aerial vehicle. After a gradient of the ground is determined, the slope can be used to guide the subsequent actions of an unmanned aerial vehicle.

Optionally, the radar in the above embodiments may be an electromagnetic wave radar, or may be a lidar.

An embodiment of the present disclosure also provides a computer storage medium storing program instructions, and the execution of the program may implement a part or all of the steps of the terrain prediction method shown in FIG. 2 and its corresponding embodiments.

FIG. 4 is a schematic structural diagram of a terrain prediction device according to one embodiment of the present disclosure. As shown in FIG. 4, the terrain prediction device 400 in this embodiment may include a memory 401 and processor 402 that are connected to each other through a bus. The memory 401 may include a read-only memory and a random access memory, and provide instructions and data to the processor 402. A part of the memory 401 may further include a non-volatile random access memory.

The memory 401 is used to store a computer program.

The processor 402 is used to call and execute the computer program to perform the following operations: acquiring N pieces of first ranging data obtained by a radar performing ranging on a ground during a rotation process, where the N pieces of first ranging data are obtained when a rotation angle of the radar is within a preset angle interval and N is an integer greater than 1, and determining a terrain parameter of the ground according to the N pieces of first ranging data, where the terrain parameter includes at least one of the following: gradient and flatness.

In some embodiments, the first ranging data includes the horizontal distance and the vertical distance of the radar from the ground ranging point, where the ground ranging point varies with the rotation angle of the radar.

In some embodiments, the processor 402 is specifically used for performing a linear fitting on the N pieces of first ranging data by a least square method to obtain a linear function; and determining terrain parameters of the ground according to the linear function.

In some embodiments, the processor 402 is specifically used for constructing a linear function of the vertical distance between the radar and the ground ranging point and the horizontal distance between the radar and the ground ranging point; determining the slope and intercept in the linear function according to the N pieces of first ranging data, the linear function, and a least square method; and determining the gradient of the ground according to the slope of the linear function, and/or, determining the flatness of the ground according to the slope and the intercept of the linear function.

In some embodiments, when the slope and the intercept in a linear function are determined according to the N pieces of first ranging data, the linear function, and the least square method, the processor 402 is specifically used for determining a residual in the linear function corresponding to each piece of first ranging data according to the N pieces of first ranging data and the linear function, where the residual corresponding to each piece of first ranging data is a function of the slope and the intercept of the linear function; determining a weighted sum of squared residuals corresponding to the N pieces of ranging data according to the residuals corresponding to various pieces of first ranging data and the weighting coefficients of the residuals; and determining the value of the slope and the value of the intercept of the linear function according to the weighted sum of squared residuals.

When the flatness of the ground is determined according to the slope and intercept of the linear function, the processor 402 is specifically used for determining the value of the weighted sum of squared residuals based on the value of the determined slope and the value of the determined intercept; and determining the flatness of the ground according to the value of the weighted sum of squared residuals.

In some embodiments, the processor 402 is specifically used for determining the value of the slope and the value of the intercept of the linear function based on that the first derivative of the weighted sum of squared residuals to the slope is equal to a first preset value and the first derivative of the weighted sum of squared residuals to the intercept is equal to a second preset value.

In some embodiments, the first preset value and the second preset value are 0.

In some embodiments, the weighting coefficients of the residuals corresponding to all of the first ranging data are equal, or, the weighting coefficient of the residual corresponding to each piece of first ranging data is a trigonometric function or a Gaussian function of the rotation angle of the radar corresponding to the first ranging data.

In some embodiments, the sum of the weighting coefficients of the residuals corresponding to the N pieces of first ranging data is equal to 1.

In some embodiments, the processor 402 is specifically used for acquiring M pieces of second ranging data obtained by a radar performing ranging on a ground during a rotation process, where the M pieces of second ranging data are all the ranging data obtained when the radar is performing ranging on the ground with a rotation angle in a preset angle interval, and M is an integer greater than or equal to N; and acquiring N pieces of first ranging data according to the M pieces of second ranging data.

In some embodiments, the processor 402 is specifically used for determining the N pieces of first ranging data according to the M pieces of second ranging data and a valid ranging condition including, smaller than or equal to a preset maximum distance and larger than or equal to a preset minimum distance.

In some embodiments, the processor 402 is specifically used for determining the second ranging data satisfying the described valid ranging condition as N pieces of second ranging data from the described M pieces of second ranging data; and determining N pieces of first ranging data according to the N pieces of second ranging data.

In some embodiments, the processor 402 is specifically used for determining the N pieces of second ranging data as the N pieces of first ranging data; or, obtaining the N pieces of first ranging data by smoothing the N pieces of second ranging data.

In some embodiments, the processor 402 is specifically used for sorting the N pieces of second ranging data according to an order of the rotation angles of the radar corresponding to the second ranging data; determining that the first piece of second ranging data is the first piece of first ranging data, and the Nth piece of second ranging data is the Nth piece of first ranging data; and determining the average value of the (j-1)th piece of second ranging data, the jth piece of second ranging data, and the (j+1)th piece of second ranging data as the jth piece of first ranging data, where j is an integer larger than or equal to 2 and smaller than or equal to N-1.

In some embodiments, the processor 402 is specifically used for obtaining all the second ranging data of the ground ranging for one revolution of the radar and the rotation angle of the radar corresponding to each piece of second ranging data; and obtaining and determining the second ranging data corresponding to the rotation angle of the radar located in the preset angle interval according to the preset angle interval as the M pieces of second ranging data.

Optionally, the above described terrain prediction device 400 can be a radar, or can be an unmanned aerial vehicle, or can be a control terminal of the unmanned aerial vehicle. Optionally, the unmanned aerial vehicle can be an agricultural unmanned aerial vehicle.

The device in this embodiment can be used to implement the technical solutions of the above described method in the embodiments of the present disclosure. The implementation principles and technical effects are similar, and are not repeated here.

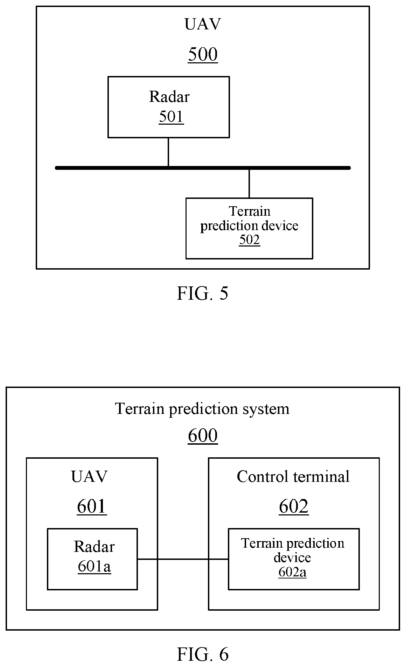

FIG. 5 is a schematic structural diagram of an unmanned aerial vehicle according to one embodiment of the present disclosure. As shown in FIG. 5, the unmanned aerial vehicle 500 in this embodiment includes a radar 501 and a terrain prediction device 502, which are communicatively connected to each other. The terrain prediction device 502 may adopt the structure of the embodiment shown in FIG. 4. Correspondingly, the terrain prediction device 502 may implement the technical solution shown in FIG. 2 and its corresponding embodiments. The implementation principles and technical effects are similar and will not be repeated here. It should be noted that the unmanned aerial vehicle 500 also includes other components that are not shown here.

FIG. 6 is a schematic structural diagram of a terrain prediction system according to one embodiment of the present disclosure. As shown in FIG. 6, the terrain prediction system 600 in this embodiment includes an unmanned aerial vehicle 601 and a control terminal 602, which are communicatively connected with each other. The control terminal 602 is used to control the unmanned aerial vehicle 601.

The unmanned aerial vehicle 601 is equipped with a radar 601a and the control terminal 602 includes a terrain prediction device 602a. The terrain prediction device 602a may adopt the structure of the embodiment shown in FIG. 4. Correspondingly, the terrain prediction device 602a may implement the technical solution shown in FIG. 2 and its corresponding embodiments. The implementation principles and technical effects are similar and will not be repeated here. It should be noted that the unmanned aerial vehicle 601 and the control terminal 602 also include other components that are not shown here.

Those having ordinary skills in the art should understand that all or part of the steps of the above described method embodiments can be implemented by a program instruction related hardware. The program can be stored in a computer-readable storage medium. When the program is executed, the program includes steps of the above described method embodiments. The storage medium can be any medium that can store program codes, for example, a read-only memory (ROM), a random access memory (RAM), a magnetic disk, or an optical disk.

The present disclosure has been described with the above embodiments, but the technical scope of the present disclosure is not limited to the scope described in the above embodiments. Other embodiments of the disclosure will be apparent to those skilled in the art from consideration of the specification and practice of the embodiments disclosed herein. It is intended that the specification and examples be considered as example only and not to limit the scope of the disclosure, with a true scope and spirit of the invention being indicated by the claims.

**Claims**

1. A terrain prediction method, comprising:

   acquiring N pieces of first ranging data obtained by a radar performing ranging on a ground during rotation, wherein the N pieces of first ranging data are obtained when a rotation angle of the radar is within a preset angle interval and N is an integer greater than 1;
   determining a terrain parameter of the ground according to the N pieces of first ranging data, wherein the terrain parameter includes at least one of the following: gradient and flatness.

2. The method of claim 1, wherein the first ranging data includes a horizontal distance and a vertical distance of the radar from a ground ranging point, wherein the ground ranging point varies with the rotation angle of the radar.

3. The method of claim 1 or 2, wherein determining the terrain parameter of the ground according to the N pieces of first ranging data includes:

   performing a linear fitting on the N pieces of first ranging data by a least square method to obtain a linear function;
   determining terrain parameters of the ground according to the linear function.

4. The method of claim 3, wherein:
   performing the linear fitting on the N pieces of first ranging data by the least square method to obtain the linear function includes:

   constructing the linear function of the vertical distance between the radar and the ground ranging point and the horizontal distance between the radar and the ground ranging point; and
   determining a slope and an intercept in the linear function according to the N pieces of first ranging data, the linear function, and the least square method;
   determining the terrain parameters of the ground according to the linear function includes:

   determining the gradient of the ground according to the slope of the linear function; and/or

determining the flatness of the ground according to the slope and the intercept of the linear function.

5. The method of claim 4, wherein:

   determining the slope and the intercept in the linear function according to the N pieces of first ranging data, the linear function, and the least square method includes:

   determining a residual in the linear function corresponding to each piece of first ranging data according to the N pieces of first ranging data and the linear function, wherein the residual corresponding to each piece of first ranging data is a function of the slope and the intercept of the linear function;
   determining a weighted sum of squared residuals corresponding to the N pieces of first ranging data according to the residuals corresponding to various pieces of first ranging data and the weighting coefficients of the residuals; and
   determining a value of the slope and a value of the intercept of the linear function according to the weighted sum of squared residuals;

   determining the flatness of the ground according to the slope and the intercept of the linear function includes:

   determining a value of the weighted sum of squared residuals based on the value of the slope and the value of the intercept; and
   determining the flatness of the ground according to the value of the weighted sum of squared residuals.

6. The method of claim 5, wherein determining the value of the slope and the value of the intercept of the linear function according to the weighted sum of squared residuals includes:
   determining the value of the slope and the value of the intercept of the linear function based on that the first derivative of the weighted sum of squared residuals to the slope is equal to a first preset value and the first derivative of the weighted sum of squared residuals to the intercept is equal to a second preset value.

7. The method of claim 6, wherein the first preset value and the second preset value are 0.

8. The method of any of claims 5-7, wherein:

   weighting coefficients of the residuals corresponding to all of the first ranging data are equal; or

the weighting coefficient of the residual corresponding to each piece of first ranging data is a trigonometric function or a Gaussian function of the rotation angle of the radar corresponding to the first ranging data.

9. The method of claim 8, wherein a sum of the weighting coefficients of the residuals corresponding to the N pieces of first ranging data is equal to 1.

10. The method of any of claims 1-9, wherein acquiring the N pieces of first ranging data obtained by the radar performing ranging on the ground during rotation includes:

   acquiring M pieces of second ranging data obtained by the radar performing ranging on the ground during rotation, wherein the M pieces of second ranging data are all the ranging data obtained when the radar is performing ranging on the ground with the rotation angle in the preset angle interval, and M is an integer greater than or equal to N; and
   acquiring the N pieces of first ranging data according to the M pieces of second ranging data.

11. The method of claim 10, wherein acquiring the N pieces of first ranging data according to the M pieces of second ranging data includes:

   determining the N pieces of first ranging data according to the M pieces of second ranging data and a valid ranging condition;
   wherein the valid ranging condition includes smaller than or equal to a preset maximum distance and larger than or equal to a preset minimum distance.

12. The method of claim 11, wherein determining the N pieces of first ranging data according to the M pieces of second ranging data and the valid ranging condition includes:

   determining the second ranging data satisfying the valid ranging condition as N pieces of second ranging data from the M pieces of second ranging data; and
   determining the N pieces of first ranging data according to the N pieces of second ranging data.

13. The method of claim 12, wherein determining the N pieces of first ranging data according to the N pieces of second ranging data includes:

   determining the N pieces of second ranging data as the N pieces of first ranging data; or
obtaining the N pieces of first ranging data by smoothing the N pieces of second ranging data.

14. The method of claim 13, wherein obtaining the N pieces of first ranging data by smoothing the N pieces of second ranging data includes:

   sorting the N pieces of second ranging data according to an order of the rotation angles of the radar corresponding to the second ranging data;
   determining that the first piece of second ranging data is the first piece of first ranging data, and the Nth piece of second ranging data is the Nth piece of first ranging data; and
   determining an average value of the (j-1)th piece of second ranging data, the jth piece of second ranging data, and the (j+1)th piece of second ranging data as the jth piece of first ranging data, wherein j is an integer larger than or equal to 2 and smaller than or equal to N-1.

15. The method of any of claims 10-14, wherein acquiring M pieces of second ranging data obtained by the radar performing ranging on a ground during rotation includes:

   obtaining all the second ranging data of the ground ranging for one revolution of the radar and the rotation angle of the radar corresponding to each piece of second ranging data; and
   obtaining and determining the second ranging data corresponding to the rotation angle of the radar located in the preset angle interval according to the preset angle interval as the M pieces of second ranging data.

16. A terrain prediction device, comprising a memory and a processor:

   the memory is configured to store a computer program;
   the processor is configured to call and execute the computer program to perform operations including:

      acquiring N pieces of first ranging data obtained by a radar performing ranging on a ground during rotation, wherein the N pieces of first ranging data are obtained when a rotation angle of the radar is within a preset angle interval and N is an integer greater than 1;
      determining a terrain parameter of the ground according to the N pieces of first ranging data, wherein the terrain parameter includes at least one of the following: gradient and flatness.

**17.** The device of claim 16, wherein the first ranging data includes a horizontal distance and a vertical distance of the radar from a ground ranging point, wherein the ground ranging point varies with the rotation angle of the radar.

**18.** The device of claim 16 or 17, wherein the processor is specifically used for:

performing a linear fitting on the N pieces of first ranging data by a least square method to obtain a linear function;
determining terrain parameters of the ground according to the linear function.

**19.** The device of claim 18, wherein the processor is specifically used for:

constructing the linear function of the vertical distance between the radar and the ground ranging point and the horizontal distance between the radar and the ground ranging point;
determining a slope and an intercept in the linear function according to the N pieces of first ranging data, the linear function, and the least square method;
determining the gradient of the ground according to the slope of the linear function, and/or, determining the flatness of the ground according to the slope and the intercept of the linear function.

**20.** The device of claim 19, wherein:

when the slope and the intercept in the linear function are determined according to the N pieces of first ranging data, the linear function, and the least square method, the processor is specifically used for:

determining a residual in the linear function corresponding to each piece of first ranging data according to the N pieces of first ranging data and the linear function, wherein the residual corresponding to each piece of first ranging data is a function of the slope and the intercept of the linear function;
determining a weighted sum of squared residuals corresponding to the N pieces of ranging data according to the residuals corresponding to various pieces of first ranging data and the weighting coefficients of the residuals; and
determining a value of the slope and the value of the intercept of the linear function according to the weighted sum of squared residuals;

when the flatness of the ground is determined according to the slope and intercept of the linear function, the processor is specifically used for:

determining a value of the weighted sum of squared residuals based on the value of the slope and the value of the intercept; and
determining the flatness of the ground according to the value of the weighted sum of squared residuals.

**21.** The device of claim 20, wherein the processor is specifically used for:
determining the value of the slope and the value of the intercept of the linear function based on that the first derivative of the weighted sum of squared residuals to the slope is equal to a first preset value and the first derivative of the weighted sum of squared residuals to the intercept is equal to a second preset value.

**22.** The device of claim 21, wherein the first preset value and the second preset value are 0.

**23.** The device of any of claims 20-22, wherein:

weighting coefficients of the residuals corresponding to all of the first ranging data are equal; or
the weighting coefficient of the residual corresponding to each piece of first ranging data is a trigonometric function or a Gaussian function of the rotation angle of the radar corresponding to the first ranging data.

**24.** The device of claim 23, wherein a sum of the weighting coefficients of the residuals corresponding to the N pieces of first ranging data is equal to 1.

**25.** The device of any of claims 16-24, wherein the processor is specifically used for:

acquiring M pieces of second ranging data obtained by the radar performing ranging on a ground during rotation, wherein the M pieces of second ranging data are all the ranging data obtained when the radar is performing ranging on the ground with the rotation angle in the preset angle interval, and M is an integer greater than or equal to N; and
acquiring the N pieces of first ranging data according to the M pieces of second ranging data.

**26.** The device of claim 25, wherein the processor is specifically used for:

determining the N pieces of first ranging data according to the M pieces of second ranging data and a valid ranging condition;

wherein the valid ranging condition includes smaller than or equal to a preset maximum distance and larger than or equal to a preset minimum distance.

27. The device of claim 26, wherein the processor is specifically used for:

determining the second ranging data satisfying the valid ranging condition as N pieces of second ranging data from the M pieces of second ranging data; and

determining the N pieces of first ranging data according to the N pieces of second ranging data.

28. The device of claim 27, wherein the processor is specifically used for:

determining the N pieces of second ranging data as the N pieces of first ranging data; or

obtaining the N pieces of first ranging data by smoothing the N pieces of second ranging data.

29. The device of claim 28, wherein the processor is specifically used for:

sorting the N pieces of second ranging data according to an order of the rotation angles of the radar corresponding to the second ranging data;

determining that the first piece of second ranging data is the first piece of first ranging data, and the Nth piece of second ranging data is the Nth piece of first ranging data; and

determining an average value of the (j-1)th piece of second ranging data, the jth piece of second ranging data, and the (j+1)th piece of second ranging data as the jth piece of first ranging data, wherein j is an integer larger than or equal to 2 and smaller than or equal to N-1.

30. The device of any of claims 25-29, wherein the processor is specifically used for:

obtaining all the second ranging data of the ground ranging for one revolution of the radar and the rotation angle of the radar corresponding to each piece of second ranging data; and

obtaining and determining the second ranging data corresponding to the rotation angle of the radar located in the preset angle interval according to the preset angle interval as the M pieces of second ranging data.

31. The device of any of claims 16-30, wherein:

the device is a radar, or an unmanned aerial vehicle, or a control terminal of the unmanned aerial vehicle.

32. An unmanned aerial vehicle, comprising:

a radar and a terrain prediction device, which are communicatively connected to each other; and

the terrain prediction device is the terrain prediction device according to any of claims 16-30.

33. A terrain prediction system, comprising:

an unmanned aerial vehicle and a control terminal, which are communicatively connected with each other;

the control terminal is used to control the unmanned aerial vehicle;

the unmanned aerial vehicle is equipped with a radar; and

the control terminal includes a terrain prediction device is the terrain prediction device according to any of claims 16-30.

FIG. 1

Acquire N pieces of first ranging data obtained by a radar performing ranging on a ground during a rotation process, wherein the N pieces of first ranging data are obtained when a rotation angle of the radar is within a preset angle interval

S201

Determine a terrain parameter of the ground according to the N pieces of first ranging data. The terrain parameter comprising at least one of the following: gradient and flatness

S202

FIG. 2

Radar         x  (Horizontal)

y  (Vertical)

Ground

FIG. 3

Terrain prediction device

**400**

Memory

**401**

Processor

**402**

FIG. 4

UAV

500

Radar

501

Terrain
prediction device
502

FIG. 5

Terrain prediction system

600

UAV

601

Radar
601a

Control terminal

602

Terrain prediction
device
602a

FIG. 6

## INTERNATIONAL SEARCH REPORT

| International application No. |
| --- |
| **PCT/CN2017/116862** |

**A.  CLASSIFICATION OF SUBJECT MATTER**

G01S 13/93(2006.01)i;  G01S 13/94(2006.01)i

According to International Patent Classification (IPC) or to both national classification and IPC

**B.  FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS, CNKI, SIPOABS, DWPI: 无人机, 雷达, 地形, 坡度, 倾斜, 平整度, 角度, 方位, 距离; unmanned aerial vehicle, UAV, radar, gradient, grade, tilt, terrain, flatness, roughness, azimuth, angle, distance

**C.  DOCUMENTS CONSIDERED TO BE RELEVANT**

| Category* | Citation of document, with indication, where appropriate, of the relevant passages | Relevant to claim No. |
| --- | --- | --- |
| X | CN 104950313 A (TONGJI UNIVERSITY) 30 September 2015 (2015-09-30) description, paragraphs 42-73, and figures 1-4 | 1, 2, 16, 17, 32, 33 |
| X | EP 2638410 A1 (THE UNIVERSITY OF SYDNEY) 18 September 2013 (2013-09-18) particular embodiments, and figures | 1, 2, 16, 17, 32, 33 |
| A | US 2010235129 A1 (HONEYWELL INTERNATIONAL INC.) 16 September 2010 (2010-09-16) entire document | 1-33 |
| A | CN 107329116 A (SHAANXI CHANGLING ELECTRONIC TECHNOLOGY CO., LTD.) 07 November 2017 (2017-11-07) entire document | 1-33 |
| A | CN 107092020 A (PEKING UNIVERSITY) 25 August 2017 (2017-08-25) entire document | 1-33 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 August 2018** | **16 August 2018** |

| Name and mailing address of the ISA/CN | Authorized officer |
| --- | --- |
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2017/116862**

| Patent document cited in search report | | | Publication date (day/month/year) | Patent family member(s) | | | Publication date (day/month/year) |
|---|---|---|---|---|---|---|---|
| CN | 104950313 | A | 30 September 2015 | CN | 104950313 | B | 07 November 2017 |
| EP | 2638410 | A1 | 18 September 2013 | AU | 2011326353 | A1 | 30 May 2013 |
| | | | | WO | 2012061896 | A1 | 18 May 2012 |
| | | | | US | 2013293408 | A1 | 07 November 2013 |
| | | | | IN | 201304278 | P1 | 21 November 2014 |
| US | 2010235129 | A1 | 16 September 2010 | None | | | |
| CN | 107329116 | A | 07 November 2017 | None | | | |
| CN | 107092020 | A | 25 August 2017 | None | | | |

Form PCT/ISA/210 (patent family annex) (January 2015)